# EUROPÄISCHE PATENTSCHRIFT

(11) **EP 3 947 123 B1**
(45) Veröffentlichungstag und Bekanntmachung des Hinweises auf die Patenterteilung: **28.10.2026**
(21) Anmeldenummer: 20715849.4
(22) Anmeldetag: 30.03.2020
(51) Int. Cl.: B62D 65/02, B62D 65/06

(54) **MONTAGEANORDNUNG LIGHT**
LIGHT MOUNTING ARRANGEMENT
STATION DE MONTAGE LÉGÈRE

(30) Priorität: 28.03.2019 DE 202019101782 U
(43) Veröffentlichungstag der Anmeldung: 09.02.2022
(73) Patentinhaber: FFT Produktionssysteme GmbH & Co. KG, 36041 Fulda (DE)
(72) Erfinder: KRAFT, Martin, 36124 Eichenzell (DE); BOETTCHER, Christian, 36043 Fulda (DE)
(74) Vertreter: SSM Sandmair
(86) Internationale Anmeldenummer: PCT/EP2020/058934
(87) Internationale Veröffentlichungsnummer: WO 2020/193801

(56) Entgegenhaltungen:
- EP-A2- 0 147 066
- DE-A1- 10 235 905
- US-A- 5 148 591
- US-A- 5 380 978
- US-A1- 2006 149 421

## Beschreibung

Die Erfindung betrifft eine Montageanordnung und ein Verfahren zur Montage eines Bauteils an einer Öffnung einer übergeordneten Baugruppe. Die Montageanordnung umfasst wenigstens einen Montageroboter mit einer Bauteilaufnahme zum Aufnehmen des Bauteils und zum Positionieren des Bauteils in einer Montageposition, eine separate Vermessungseinheit, die bevorzugt unabhängig von dem Montageroboter im Raum bewegbar ist, mit wenigstens einem Sensor, um eine Lage des von dem Montageroboter in der Montageposition gehaltenen Bauteils relativ zu der Baugruppe zu erfassen. Die Montageanordnung umfasst ferner eine Steuerung, die mit dem Montageroboter und der Vermessungseinheit verbunden ist, mit einer Empfangseinheit für Signale der Vermessungseinheit, einem Prozessor, der die von der Empfangseinheit empfangenen Signale verarbeitet, und einer Sendeeinheit zum Senden von Stellsignalen an den Montageroboter.

Es sind Montageeinheiten bekannt, bei denen ein Bauteil mithilfe eines Werkzeugs oder Greifwerkzeugs, das mit einem Roboter verbunden sein kann, in eine Montageposition bewegt wird. Mit dem Roboter oder dem Werkzeug ist ein Sensor verbunden, der die vorgegebenen Montageposition überwacht. Bei dem Sensor kann es sich beispielsweise um eine Kamera handeln. Kommt es zu einer Störung des Sensors, muss das gesamte Werkzeug stillgelegt werden, um den Sensor auszutauschen oder zu reparieren. Das bedeutet, dass das Werkzeug vom Roboter getrennt werden muss und der Roboter, soweit vorhanden, mit einem intakten Werkzeug verbunden werden muss, ehe die Produktion wieder anlaufen kann. Alternativ kann ein zweiter Roboter mit einem zweiten identischen Werkzeug vorgehalten werden, um eine Produktionsunterbrechung zu verhindern.

Aus der DE 20 2005 019 619 U1 ist beispielsweise eine Montageanlage für Türen an Fahrzeugkarosserien bekannt, mit einer Montageeinrichtung, die eine Positioniereinrichtung zum Positionieren einer Fahrzeugtür in einer Montageposition umfasst, wobei die Positioniereinrichtung mit einer Mess- und Ausrichtevorrichtung für eine passgenaue Positionierung der jeweiligen Fahrzeugtüre ausgerüstet ist. Die Positioniervorrichtung kann mehrere Sensoren umfassen, die flächig verteilt an einem Greifwerkzeug, mit dem die Fahrzeugtür gegriffen und in die Montageposition bewegt wird, angeordnet sind. Aus der US 5 380 979 A ist eine Vorrichtung und ein Verfahren bekannt, mit dem Autokarosserien oder andere dreidimensionale Objekte zusammengebaut werden können. Die Anmeldung betrifft in erster Linie die Herstellung von einzelnen Komponenten, wie Autotüren oder Karosserierahmen, die aus mehreren Teilen, die zusammengeschweißt werden, bestehen. Die DE 102 35 905 A1 betrifft eine Anlage und ein Verfahren zum Einsetzen einer Frontscheibe in eine Karosserie. Weitere Anlagen für ähnliche Zwecke sind aus der EP 0 147 066A2, der US 5 184 591 A und der US 2006/149421 A2 bekannt.

Die Nutzung solcher multifunktionaler Werkzeuge birgt die Gefahr in sich, dass beim Ausfall einer Komponente, wie zum Beispiel eines Sensors, das gesamte Werkzeug gewechselt werden muss, um den Arbeitsfluss so wenig wie möglich zu stören. Je mehr Funktionen ein Werkzeug in sich vereinigt, desto größer die Gefahr des Ausfalls, abgesehen von den in der Regel hohen Kosten solcher Werkzeuge.

Im Sinne des ständigen Kostendrucks wäre es daher wünschenswert eine Montageanlage so zu gestalten, dass das Ausfallrisiko der Anlage minimiert wird, ein Austausch eines defekten Teils schnell erfolgen kann, und all das, ohne die Kosten für die Anlage zu erhöhen.

Es ist eine Aufgabe der Erfindung eine Montageanordnung mit einer Vermessungseinheit zur Verfügung zu stellen, wobei die Montageanordnung wartungsfreundlich und kostengünstig ist.

Diese Aufgabe wird erfindungsgemäß durch den Gegenstand des Anspruchs 1 gelöst. Vorteilhafte Weiterbildungen sind in den abhängigen Ansprüchen und in der Beschreibung offenbart.

Ein Aspekt der Erfindung betrifft eine Montageanordnung zur Montage eines Bauteils an einer Öffnung einer übergeordneten Baugruppe, mit wenigstens einem Montageroboter mit einer Bauteilaufnahme zum Aufnehmen des Bauteils und zum Positionieren des Bauteils in einer Montageposition, wenigstens einer separaten Vermessungseinheit, die unabhängig von dem Montageroboter im Raum bewegbar ist, mit wenigstens einem Sensor, um eine Lage des von dem Montageroboter in der Montageposition gehaltenen Bauteils relativ zu der Baugruppe zu erfassen, einer Steuerung, die mit dem Montageroboter und der Vermessungseinheit verbunden ist, wobei die Steuerung wenigstens eine Empfangseinheit für Signale der Vermessungseinheit, einen Prozessor, der die von der Empfangseinheit empfangenen Signale verarbeitet, und eine Sendeeinheit zum Senden von Stellsignalen an den Montageroboter umfasst, wobei die Vermessungseinheit eine Trägereinheit umfasst, die nur den Sensor, bevorzugt nur einen einzigen Sensor oder einen Kombinationssensor trägt.

Dabei kann die Steuerung eine zentrale Steuerung sein, die den Prozessor, die Empfangseinheit und die Sendeeinheit umfasst. Die Steuerung kann insbesondere Teil der Vermessungseinheit sein. Die Kommunikation mit dem wenigstens einen Montageroboter erfolgt bevorzugt über eine kabellose Verbindung, weniger bevorzugt können die Steuerung und der Montageroboter mittels einer Kabelverbindung, insbesondere eine Glasfaserkabelverbindung miteinander verbunden sein.

Die Vermessungseinheit kann als Trägereinheit einen weiteren Roboter mit einem frei im Raum beweglichen Roboterarm umfassen. Bevorzugt trägt der weitere Roboter nur die Vermessungseinheit mit dem wenigstens einen Sensor und keine weitere Vorrichtung, wie zum Beispiel eine Werkstück- oder Werkzeugaufnahme. Der Sensor kann an einem vorderen Ende des beweglichen Roboterarms angeordnet sein und von dem Roboterarm bewegt werden. Dabei kann der Sensor fest, das heißt, im Wesentlichen starr mit dem vorderen Ende des Roboterarms verbunden sein, oder der Sensor kann relativ zum Roboterarm bewegt, zum Beispiel verschwenkt, werden, um an einer Messstelle exakt ausgerichtet zu werden. Als Roboter wird hier jede Vorrichtung angesehen, mit der der Sensor verbunden werden kann, so dass er relativ zu der Vorrichtung bewegt werden kann. Die Vorrichtung muss keinen Arm aufweisen, der Sensor kann auch zum Beispiel direkt mit der Trägereinheit in Form eines Grundkörpers der Vermessungseinheit verbunden sein, so dass der Sensor relativ zu der Trägereinheit verdreht und/oder verschwenkt werden kann. Die Vermessungseinheit ist im Bereich der Montageanordnung automatisch verfahrbar oder von Hand verstellbar.

Bei dem wenigstens einen Sensor kann es sich um einen 3D Sensor oder einen 20 Sensor oder einen 1D Sensor handeln, oder der Sensor kann wenigstens zwei 1D Sensoren umfassen. Bei dem Sensor kann es sich auch um einen kombinierten Sensor handeln.

Der wenigstens eine Sensor kann insbesondere hergerichtet sein, ein Spaltmaß zwischen zwei im Wesentlichen parallel verlaufenden Kanten der Baugruppe und des Bauteils zu erfassen. Ein bevorzugt zusätzlicher Sensor kann dafür vorgesehen sein, dreidimensionale Formen zu überprüfen, Abstände zu messen, Schichtdicken zu kontrollieren, Farben zu kontrollieren oder andere Aufgaben, die typischerweise von Sensoren übernommen werden, zu erledigen.

Nutzt die Montageanordnung mehr als einen Sensor um die Montageposition des Bauteils oder eine Spaltbreite zwischen einer Umfangsfläche des Bauteils und einer Umfangsfläche der Öffnung in der übergeordneten Baugruppe zu erfassen, ist jeder der Sensoren bevorzugt mit einem Roboter verbunden und bildet eine eigene, separate Vermessungseinheit.

Der wenigstens eine Sensor kann ein an- und ausschaltbares und bevorzugt in der Leuchtstärke verstellbares Lampenelement umfassen, um den jeweiligen Messbereich, wenn nötig, auszuleuchten. Dabei kann es sich um für das menschliche Auge sichtbares Licht oder zum Beispiel um Infrarotstrahlung oder eine andere für das menschliche Auge nicht oder nur schwer wahrnehmbare Lichtstrahlung handeln.

Die Aufnahme zum Aufnehmen des Bauteils oder Bauteilaufnahme kann mit dem Bauteil an einer definierten Bauteilinnenseite verbindbar sein. Das heißt, die Bauteilaufnahme ist so hergerichtet, dass sie das Bauteil an einer Innenseite greift und dabei die vorgegebenen Strukturen der Bauteilinnenseite nutzt. Dabei kann die Bauteilaufnahme direkt an die Innenseite des Bauteils herangeführt und mit dem Bauteil verbunden werden, oder die Bauteilaufnahme wird von außen durch zum Beispiel eine Fensteröffnung einer Tür an die Innenseite des Bauteils geführt und mit dem Bauteil verbunden.

Die Bauteilaufnahme kann insbesondere ein Bauteiladapter sein, der Ausnehmungen, Vertiefungen, Durchgangslöcher, Bohrungen, Durchbrüche in einer definierten Innenseite des Bauteils nach der 3-2-1- Regel nutzt, um das Bauteile definiert zu greifen und definiert in der Montageposition bereitzustellen.

Der wenigstens eine Montageroboter greift dabei das Bauteil so, dass er es in die Montageposition bewegen und dort so positionieren kann, dass eine Außenseite des Bauteils für die Vermessungseinheit im Wesentlichen, das heißt, nahezu vollflächig oder vollständig vollflächig, zugänglich ist.

Die Montageanordnung kann ferner wenigstens ein weiteres bevorzugt externes Vermessungssystem umfassen. Das weitere Vermessungssystem kann beispielsweise ein Laserradar Smart Eye, Eye Tein 3D-Lasertracker, ein Indoor-GPS oder eine andere Messvorrichtung, insbesondere Roboterumfeld-Überwachungssysteme, zur Durchführung einer Spalt-Übergangsmessung zur Bestimmung der Spaltbreite und/oder der Montageposition des Bauteils relativ zur Baugruppe sein. Bevorzugt kann das wenigstens eine externe Vermessungssystem mit der Steuerung der Montageanordnung verbunden oder verbindbar sein. Das externe Vermessungssystem kann im Gegensatz zu der Vermessungseinheit ortsfest installiert sein.

Die Vermessungseinrichtung und/oder das externe Vermessungssystem können zusätzlich Markierungen auf dem Bauteil und/oder der übergeordneten Baugruppe erfassen, mit dem die Position des Bauteils relativ zur Baugruppe exakt bestimmt werden kann. Bei den Merkmalen kann es sich zum Beispiel um exponierte Stellen am Bauteil und/oder der Baugruppe handeln, wie Kanten, Öffnungen etc., oder die Markierungen können mit dem Bauteil und/oder der Baugruppe verbunden oder zum Beispiel mit Farbe auf das Bauteil und/oder die Baugruppe aufgebracht sein. Dabei können die Vermessungseinrichtung und das externe Vermessungssystem einzeln und unabhängig voneinander eingesetzt werden. Die von den beiden System gemessenen Daten können in der Steuerung zusammengeführt werden, um eine Optimierung der Einbauposition des Bauteils zu erreichen.

Die Optimierung der Einbauposition kann kontinuierlich erfolgen, das heißt, die Vermessungseinrichtung und/oder das Vermessungssystem überprüft/en in der Serienfertigung die Position jedes Bauteils relativ zur jeweiligen Baugruppe. Die Vermessungseinrichtung und/oder das Vermessungssystem kann alternativ benutzt werden, um zu Beginn der Produktion eine optimierte Anbauposition des Bauteils an der Baugruppe dadurch zu bestimmen, dass nach einer vorgegebenen Anzahl von einzeln optimierten Einbaupositionen durch die Steuerung eine optimale Serienanbauposition für das Bauteil an der Bauteilgruppe durch beispielsweise Mittelwertbildung bestimmt wird, so dass die folgende Produktion oder zumindest eine vorgegebene Anzahl von Montagen ohne weitere Detailmessungen erfolgen kann. Dieses Vorgehen kann Zeit sparen und sich somit kostensenkend auf die Produktion auswirken. Während dieser Phase der Produktion kann insbesondere die Vermessungseinrichtung zur Qualitätskontrolle eingesetzt werden, indem sie Signale an die Steuerung sendet, wenn ein oder mehrere vorgegebene Grenzwerte erreicht oder überschritten werden. Diese Meldung kann einen neuen Zyklus zur Bestimmung der optimierten Anbauposition durch Mittelwertbildung starten.

Die Vermessungseinheit oder die zwei oder mehr Vermessungseinheiten und/oder das externe Vermessungssystem erfassen, wie oben bereits erwähnt, insbesondere ein Spaltmaß zwischen dem Bauteil und der Baugruppe an mehreren Messtellen und sendet die erfassten Messdaten an die Steuerung. Dabei kann der wenigstens eine Sensor ein optischer Sensor, wie ein Bildverarbeitungssensor, eine Kamera oder ein anderer Sensor sein, mit dem ein Abstand zwischen zwei im Wesentlichen parallel zueinander verlaufenden Kanten ermittelt wird. Bei der durch die Messdaten bestimmten Position handelt es sich um eine Messposition, die von der Montageposition abweichen kann.

Die Steuerung oder der Prozessor kann einen Speicher umfassen, in dem theoretisch ermittelte SOLL-Daten für eine Relativposition der Bauteils zu der Baugruppe hinterlegt sind, so dass sie vom Prozessor herangezogen werden können. Der Prozessor kann hergerichtet sein, die im Speicher hinterlegten Soll-Daten für die Relativposition des Bauteils zu der Baugruppe mit den von der Vermessungseinheit erfassten und an die Empfangseinheit gesendeten IST-Daten der Messposition zu vergleichen und daraus Korrekturdaten für den Montageroboter zu berechnen. Die errechneten Korrekturdaten können sodann von der Sendeeinheit als Stellsignale an den Montageroboter gesendet werden, so dass dieser das Bauteil in die Montageposition, in der es mit der Baugruppe verbunden wird, bewegen kann.

Bei der Baugruppe kann es sich bevorzugt um eine Fahrzeugkarosserie handeln, respektive um einen Rohbau einer Fahrzeugkarosserie vor dem Zusammenbau mit weiteren Teilen. Bei dem Bauteil kann es sich insbesondere um eine Fahrzeugtür, einen Kofferraumdeckel, einen Deckel, eine Klappe etc. handeln, die mit der Fahrzeugkarosserie so verbunden sind, dass sie einen sichtbaren Teil eines fertigen Fahrzeugs bilden.

Bei der Fahrzeugtür, die im Regelfall aus einer starren Innenstruktur besteht, die mit einer relativ instabilen, weil dünnen Außenhaut aus beispielsweise Blech oder Kunststoff verbunden ist, ist es wichtig, dass beim Greifen und Positionieren durch den Montagroboter keine Relativbewegung zwischen der Innenstruktur und der Außenhaut auftritt, um eine Verformung der Außenhaut bei der Montage zu vermeiden.

Der wenigstens eine Montageroboter und die Vermessungseinheit/en der Montageanordnung können auf einer gleichen Seite neben der Baugruppe angeordnet sein. Wie oben bereits kurz angedeutet, kann in diesem Fall der wenigstens eine Roboter die Fahrzeugtür von außen kommend durch eine Fensteröffnung hintergreifen und die Fahrzeugtür in der Montageposition an der Innenseite halten. Dadurch stört der wenigstens eine Roboter, respektive die mit ihm verbundene Bauteilaufnahme die Vermessungseinheit nicht, so dass diese, respektive der Sensor vorgegebene Messpunkte an der Außenseite der Fahrzeugkarosserie und des Bauteils gut erfassen kann. Die vorgegebenen Messpunkt können dann nacheinander, bevorzugt in einer vorgegebenen Reihenfolge erfasst und vermessen werden. Bei mehreren Vermessungseinheiten können bevorzugt alle relevanten Messpunkt gleichzeitig erfasst werden.

Um eine Fahrzeugtür in einer Karosserieöffnung genau zu positionieren können von dem Sensor/den Sensoren beispielsweise wenigstens drei Punkte, einer an einem in Fahrtrichtung vorderen Ende der Tür, einer an einem in Fahrzeugrichtung hinteren Ende der Tür und einer an einem oberen Ende der Tür erfasst werden. Bevorzugt wird pro vorderem, hinterem und oberem Ende mehr als ein Messpunkt erfasst, zum Beispiel zwei, drei oder mehr Messpunkte.

Der Spalt am unteren Ende kann auch mit vermessen werden. Im Regelfall wird dieser Spalt beim fertigen Fahrzeug optisch kaum wahrgenommen, so dass dieser Spalt respektive das Spaltmaß dieses Spalts genutzt wird, um notwenige Änderungen an den anderen Spaltmaßen auszugleichen. Das heißt, die gut sichtbaren Spaltmaße am vorderen, hinteren und oberen Ende der Fahrzeugtür werden optimiert, das Spaltmaß des Spalts am unteren Ende der Fahrzeugtür ergibt sich im Wesentlichen automatisch aus der Optimierung der anderen Spaltmaße. Es findet somit bei der Montage ein Ausgleich der Spaltmaße statt, der durch die gegebenen Bauteiltoleranzen unterschiedlich sein kann. Dabei kann ein Messpunkt auf der Türoberfläche benutzt werden, um eine Gewichtung vorzunehmen, die für optimale Spaltmaße im Umfangsbereich der Tür sorgt.

Alternativ zu Anordnung des wenigstens einen Montageroboters und der Vermessungseinheit/en auf der gleichen Seite der Baugruppe, können der Montageroboter und die Vermessungseinheit/en an gegenüberliegenden Seiten der Baugruppe, über oder hinter oder vor der Baugruppe oder in einer anderen optimierten Position oder Relativposition angeordnet sein.

Wie oben bereits kurz beschrieben, kann in diesem Fall der Montageroboter das Bauteil direkt an der Innenseite greifen und das Bauteil zum Beispiel durch den Innenraum der Baugruppe, wie einer Fahrzeugkarosserie, in die Montageposition bewegen. Handelt es sich bei der Baugruppe um die Karosserie eines Cabriolets, kann der Montageroboter das Bauteil, wie die Fahrzeugtür, von oben in die Montageposition bewegen und dort halten, unabhängig davon, wo der Montageroboter und die Vermessungseinheit relativ zur Baugruppe positioniert sind. Ist eine Tür bereits montiert, so kann die zweite Türe durch die geöffnete erste Tür und durch den Innenraum der Baugruppe in die Montageposition bewegt werden. Wie bereits beschrieben, kann die Tür alternativ von einem Montageroboter, der auf der gleichen Seite des Fahrzeugs wie die Vermessungseinheit oder an beispielsweise einer Brücke, die die Montageanordnung überspannt, angeordnet ist, die Fensteröffnung durchgreifen, um das Bauteil zu halten und zu positionieren. Mit der Brücke kann auch eine Fügevorrichtung verbunden sein, die die vom Montageroboter gehaltene Tür mit der Karosserie verbindet.

Bevorzugt kann die Bauteilaufnahme mit einer Innenseite des Bauteils verdrehsicher und linear relativ zu dem Bauteil nicht verschiebbar verbunden werden. Das heißt, das Bauteil, kann in der Montageposition nur mittels des Montageroboters bewegt werden, um nach der Vermessung der Spaltmaße durch die Vermessungseinheit von der ursprünglich eingenommenen Position in eine korrigierte Endposition bewegt zu werden.

Um zu vermeiden, dass die Außenhaut der Baugruppe und/oder des Bauteils bei der Montage verletzt, zum Beispiel verkratzt, wird, wird die Außenhaut vor, während und nach der Montage bevorzugt weder von dem wenigstens eine Roboter noch von der Vermessungseinheit berührt oder kontaktiert. Dazu kann die Vermessungseinheit einen zusätzlichen Sensor aufweisen, der eine Bewegung der Vermessungseinheit stoppt, wenn diese, respektive der wenigstens eine Sensor, zu dicht an die Außenhaut herangeführt wird, so dass die Gefahr eines Kontakts besteht. Muss der Montageroboter das Bauteil mit dem Greifwerkzeug an der Außenhaut greifen, ist das greifwerkzeug bevorzugt so gestaltet, dass es die Außenhaut nicht verletzen kann. Beispielsweise kann das Bauteil an der Außenhaut mit Sauggreifern gehalten werden.

Die Montageanordnung kann ferner wenigstens eine Fügevorrichtung, wie einen Fügeroboter umfassen, die im Rahmen der Montage notwendige Fügeaufgaben ausführt. Solche Fügearbeiten können Schweißungen, Lötungen, Nietungen oder Klebungen sein, das Einbringen eines Bolzens in eine Scharnierverbindung, das Schrauben einer Mutter auf ein Gewinde, usw. Die Fügevorrichtung kann einen Werkzeugkopf umfassen, mit dem mehrere unterschiedliche Fügeaufgaben bevorzugt nacheinander durchgeführt werden können. Die Fügevorrichtung kann neben der Baugruppe auf derselben Seite angeordnet sein, wie der wenigstens eine Roboter, auf der bezüglich der Baugruppe gegenüberliegenden Seite oder an der Brücke, falls eine solche vorhanden ist.

Schließlich kann die Montageanordnung eine Zuführungsvorrichtung umfassen, die zur Montage notwendige Teile, wie Bolzen, Niete, Schrauben, Muttern, usw. der Fügevorrichtung zuführt.

Ein weiterer Aspekt der Erfindung ist ein Verfahren zum Montieren eines Bauteils an einer Öffnung einer übergeordneten Baugruppe mit der vorbeschriebenen Montageanordnung. Das Verfahren, das benutzt wird, um ein Bauteil an einer Öffnung einer übergeordneten Baugruppe mit Hilfe eines Positionswerkzeugs zu positionieren, umfasst die Schritte:
a) Greifens des Bauteils mit einem Positionierwerkzeug und das Führen des Bauteils mit dem Positionierwerkzeug in eine Montageposition an der Baugruppe,
b) Erfassen eines Spalts, respektive eines Spaltmaßes des Spalts, der zwischen einem Rand der Öffnung der übergeordneten Baugruppe und einem im Wesentlichen dazu parallel verlaufenden Umfangsrand des Bauteils gebildet ist mit Hilfe von wenigstens einer Vermessungseinrichtung und/oder einer externen Vermessungseinrichtung,
c) Senden des erfassten Spaltmaßes an eine Steuerung,
d) Vergleichen der von der Steuerung empfangenen IST-Spaltmaßdaten mit in einem Speicher der Steuerung hinterlegten SOLL-Spaltmaßdaten in einem Prozessor der Steuerung,
e) Berechnen und optional Gewichten von Abweichungen zwischen den SOLL-Spaltmaßdaten und den IST-Spaltmaßdaten,
f) Berechnen von Korrekturdaten, falls die Abweichungen einen vorgegebenen Grenzwert überschreiten,
g) Senden der berechneten Korrekturdaten an das Positionierwerkzeug, wenn diese den Grenzwert nicht übersteigen oder Generieren einer Fehlermeldung,
h) Bewegen des Positionierwerkzeugs aufgrund der von der Steuerung empfangenen Korrekturdaten und dadurch Neupositionieren des Bauteils an der Öffnung der übergeordneten Baugruppe.
i) Optional Kontrollieren der korrigierten Position durch die Vermessungseinrichtung,
j) Fügen des Bauteils mit der übergeordneten Baugruppe.

Alle Merkmale, die zur Montageanordnung beschrieben wurden, können -mutatis mutandis- das Verfahren zum Montieren eines Bauteils an einer Öffnung vorteilhaft weiterbilden, und die zum Verfahren beschriebenen Merkmale können entsprechend zur Fortbildung der Montageanordnung genutzt werden.

Im Folgenden werden in anspruchsähnlich formulierten Aspekten vorteilhafte Merkmale der Erfindung behandelt. Die Aspekte können herangezogen werden, um Ansprüche zu ersetzen und/oder zu ergänzen.

Aspekt1. Montageanordnung zur Montage eines Bauteils an einer Öffnung einer übergeordneten Baugruppe, wobei die Montageanordnung umfasst:
wenigstens einen Montageroboter mit einer Bauteilaufnahme zum Aufnehmen des Bauteils und zum Positionieren des Bauteils in einer Montageposition,
eine unabhängig von dem wenigstens einen Roboter im Raum verfahrbare Vermessungseinheit mit wenigstens einem Sensor, um eine Lage des von dem wenigstens einen Roboter in der Montageposition gehaltenen Bauteils relativ zu der Baugruppe zu erfassen,
und einer Steuerung, die mit dem wenigstens einen Roboter und der Vermessungseinheit signaltechnisch verbunden ist und Signale von der Vermessungseinheit empfangen und an den wenigstens einen Roboter sendet.

Aspekt2. Montageanordnung nach Aspekt1, wobei die Steuerung eine Empfangseinheit zum Empfang von Signalen der Vermessungseinheit, einen Prozessor, der die von der Empfangseinheit empfangenen Signale verarbeitet, und eine Sendeeinheit zum Senden von Stellsignalen an den wenigstens einen Roboter umfasst.

Aspekt3. Montageanordnung nach Aspekt1 oder Aspekt 2, wobei die Vermessungseinheit ein Roboter mit einem frei im Raum beweglichen Roboterarm und den wenigstens einen Sensor umfasst.

Aspekt4. Montageanordnung nach dem vorhergehenden Aspekt, wobei der weitere Roboter nur den wenigstens einen Sensor und bevorzugt keine weitere Vorrichtung trägt.

Aspekt5. Montageanordnung nach einem der vorhergehenden Aspekte, wobei der wenigstens eine Sensor ein 3D Sensor oder ein 2D Sensor ist, oder wenigstens zwei 1D Sensoren oder einen kombinierten Sensor umfasst.

Aspekt6. Montageanordnung nach einem der vorhergehenden Aspekte, wobei der wenigstens eine Sensor hergerichtet ist, berührungslos ein Spaltmaß zwischen zwei im Wesentlichen parallel verlaufenden Kanten zu erfassen.

Aspekt7. Montageanordnung nach einem der vorhergehenden Aspekte, wobei der wenigstens eine Sensor ein Lampenelement umfasst, um den jeweiligen Messbereich, wenn nötig, auszuleuchten.

Aspekt8. Montageanordnung nach einem der vorhergehenden Aspekte, wobei die Aufnahme zum Aufnehmen des Bauteils mit dem Bauteil an einer definierten Bauteilinnenseite verbindbar ist.

Aspekt9. Montageanordnung nach einem der vorhergehenden Aspekte, wobei die Aufnahme ein Bauteiladapter ist, der Ausnehmungen, Durchgangslöcher, Bohrungen, Durchbrüche in einer definierten Innenseite des Bauteils nach der 3-2-1-Regel nutzt, um das Bauteil definiert in der Montageposition bereitzustellen.

Aspekt10. Montageanordnung nach einem der vorhergehenden Aspekte, wobei der wenigstens eine Roboter das Bauteil so greift und positioniert, dass eine Außenseite des Bauteils für die Vermessungseinheit im Wesentlichen vollflächig zugänglich ist.

Aspekt11. Montageanordnung nach einem der vorhergehenden Aspekte, wobei die Montageanordnung ferner wenigstens ein weiteres externes Vermessungssystem umfasst.

Aspekt12. Montageanordnung nach dem vorhergehenden Aspekt, wobei das weitere Vermessungssystem ein Smart Eye, ein 3D-Lasertracker, ein Indoor-GPS, ein Laser-Radar oder eine andere 3D Messmethode zur bevorzugt absolut genauen Bestimmung der Montageposition des Bauteils relativ zur Baugruppe ist.

Aspekt13. Montageanordnung nach einem der zwei vorhergehenden Aspekte, wobei das wenigstens eine externe Vermessungssystem mit der Steuerung verbunden oder verbindbar ist.

Aspekt14. Montageanordnung nach einem der vorhergehenden Aspekte, wobei die Vermessungseinheit ein Spaltmaß zwischen dem Bauteil und der Baugruppe an mehr als einer Messtellen erfasst und an die Steuerung sendet.

Aspekt15. Montageanordnung nach einem der vorhergehenden Aspekte, wobei der wenigstens eine Sensor ein optischer Sensor, wie ein Bildverarbeitungssensor, eine Kamera oder ein anderer Sensor ist, mit dem ein Abstand zwischen zwei im Wesentlichen parallel zueinander verlaufenden Kanten kontaktlos ermittelbar ist.

Aspekt16. Montageanordnung nach einem der vorhergehenden Aspekte, wobei der Prozessor einen Speicher umfasst, in dem vorgegebene Soll-Daten für eine Relativposition der Bauteils zu der Baugruppe hinterlegt sind.

Aspekt17. Montageanordnung nach dem vorhergehenden Aspekt, wobei der Prozessor hergerichtet ist, die im Speicher hinterlegten Soll-Daten für die Relativposition des Bauteils zu der Baugruppe mit den von der Vermessungseinheit erfassten und an die Empfangseinheit gesendeten Ist-Daten zu vergleichen und daraus Korrekturdaten für den wenigstens einen Roboter zu berechnen.

Aspekt18. Montageanordnung nach dem vorhergehenden Aspekt, wobei die errechneten Korrekturdaten von der Sendeeinheit als Stellsignale an den wenigstens einen Roboter gesendet werden.

Aspekt19. Montageanordnung nach einem der vorhergehenden Aspekte, wobei es sich bei der Baugruppe um eine Fahrzeugkarosserie handelt.

Aspekt20. Montageanordnung nach einem der vorhergehenden Aspekte, wobei es sich bei dem Bauteil um eine Fahrzeugtür, einen Kofferraumdeckel, einen Deckel, eine Klappe etc. handelt, die mit einer Fahrzeugkarosserie so verbunden sind, dass sie einen sichtbaren Teil eines fertigen Fahrzeugs bilden.

Aspekt21. Montageanordnung nach dem vorhergehenden Aspekt, wobei der wenigstens eine Roboter bei der Fahrzeugtür von außen kommend durch eine Fensteröffnung hindurchgreift und die Fahrzeugtür an der Innenseite aufnimmt.

Aspekt22. Montageanordnung nach einem der vorhergehenden Aspekte, wobei der wenigstens eine Roboter und die Vermessungseinheit auf einer gleichen Seite in Längsrichtung der Baugruppe neben der Baugruppe angeordnet sind.

Aspekt23. Montageanordnung nach Aspekt 20, wobei der wenigstens eine Roboter das Bauteil direkt an der Innenseite greift und das Bauteil durch den Innenraum des Fahrzeugs in die Montageposition bewegt.

Aspekt24. Montageanordnung nach einem der vorhergehenden Aspekte, wobei der wenigstens eine Roboter und die Vermessungseinheit in Längsrichtung der Baugruppe an gegenüberliegenden Seite der Baugruppe angeordnet sind.

Aspekt25. Montageanordnung nach einem der vorhergehenden Aspekte, wobei zumindest der wenigstens eine Roboter an einer Brücke angeordnet ist, die die Montageanordnung überbrückt.

Aspekt26. Montageanordnung nach dem vorhergehenden Aspekt, wobei der wenigstens eine Roboter von oben kommend das Bauteil greift.

Aspekt27. Montageanordnung nach einem der vorhergehenden Aspekte, wobei die Bauteilaufnahme mit einer Innenseite des Bauteils verdrehsicher mit den Bauteil verbunden ist.

Aspekt28. Montageanordnung nach einem der vorhergehenden Aspekte, wobei die Bauteilaufnahme mit einer Innenseite des Bauteils linear relativ zu dem Bauteil nicht verschiebbar verbunden ist.

Aspekt29. Montageanordnung nach einem der vorhergehenden Aspekte, wobei vor, während und nach der Montage weder der wenigstens eine Roboter noch die Vermessungseinheit eine Außenhaut des Bauteils kontaktiert.

Aspekt30. Montageanordnung nach einem der vorhergehenden Aspekte, wobei die Montageanordnung ferner wenigstens eine Fügevorrichtung, wie einen Fügeroboter umfasst, die im Rahmen der Montage notwendige Fügeaufgaben ausführt.

Aspekt31. Montageanordnung nach dem vorhergehenden Aspekt, wobei die Montageanordnung ferner eine Zuführungsvorrichtung umfasst, die zur Montage notwendige Teile, wie Bolzen, Niete, Schrauben, Muttern, etc. der Fügevorrichtung zuführt.

Aspekt32. Montageanordnung nach einem der zwei vorhergehenden Aspekte, wobei die Fügevorrichtung und/oder die Zuführungsvorrichtung neben der Baugruppe auf derselben Seite wie der wenigstens eine Roboter oder an einer die Montageanordnung überspannende Brücke angeordnet ist.

Die Erfindung wird im Folgenden anhand von Figuren näher erläutert. Die Figuren betreffen ein einziges Ausführungsbeispiel der Erfindung, die nicht auf das gezeigte Ausführungsbeispiel beschränkt ist. Erfindungswesentliche Merkmale, die nur den Figuren entnommen werden können, zählen zur Offenbarung der Erfindung und können einzeln oder in Kombinationen den Gegenstand der Erfindung vorteilhaft weiterbilden.

Die Figuren zeigen im Einzelnen.
- Figur 1:: skizzenhafte Sicht von der Seite auf eine erste erfindungsgemäße Montageanordnung;
- Figur 2:: skizzenhafte Sicht von der Seite auf eine zweite erfindungsgemäße Montageanordnung;
- Figur 3:: Skizze der Signale zu und von der Steuerung;
- Figur 4:: Vermessung der Spaltbreiten mit mehreren im Raum verfahrbaren Messeinheiten;
- Figur 5:: Ablaufdiagramm;
- Figur 6 bis Figur 12:: alternative Verfahrensweisen zum Platzieren einer Tür an einer Karosserie.

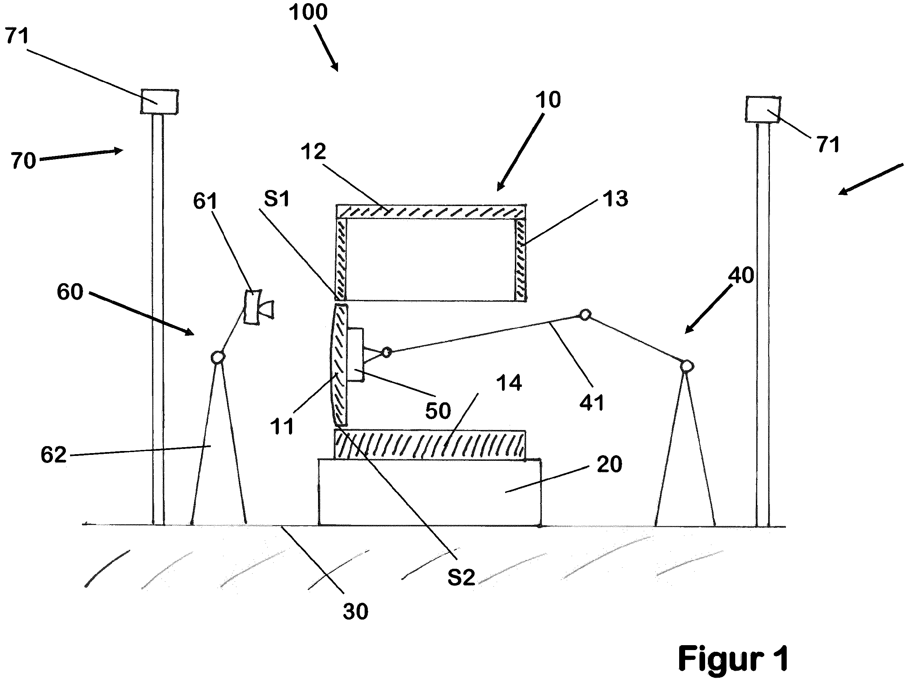

Die Figur 1 zeigt eine Montageanordnung 100 gemäß der Erfindung, mit der eine Tür 11 relativ zu einer Fahrzeugkarosserie 10 positioniert werden kann. Die Karosserie ist in einer Schnittansicht quer zur Fahrzeuglängsachse L dargestellt, mit dem Dach 12, der A-Säule 13 und dem Untergestell 14. Die Fahrzeugkarosserie 10 steht auf einem Transportmittel 20, das wiederum auf einem Boden 30, beispielsweise einem Hallenboden, steht oder mit diesem Verbunden ist. Bei dem Transportmittel 20 kann es sich um ein Fließband oder eine verfahrbare Montagebox handeln. Das Transportmittel 20 kann auch eine fest im Raum positionierte Montageplattform sein, zu der die Fahrzeugkarosserie 10 hinbewegt wird, um dort abgesetzt zu werden. Nach der Montage kann die Fahrzeugkarosserie dann zur nächsten Bearbeitungsstation bewegt werden, zum Beispiel mittels eines Deckenkrans oder einer anderen Transporteinrichtung.

Die Montageanordnung 100 im Ausführungsbeispiel umfasst einen Montageroboter 40, der auf dem Boden 30 neben dem Transportmittel 20 und neben der Karosserie 10 steht. Der Montageroboter 40 umfasst einen Roboterarm 41, der frei im Raum bewegt werden kann. Der Montageroboter 40 selbst kann ortsfest montiert sein oder zum Beispiel auf einer nicht dargestellte Schiene relativ zu der Karosserie 10 in der gezeigten Montageposition verfahren werden, oder selbstfahrend ausgebildet sein, so dass er sich frei auf dem Boden bewegen kann. Bei dem Montageroboter 40 kann es sich um einen bekannten Industrieroboter handeln. Der Roboterarm 41 weist an seinem freien Ende eine Greifwerkzeug 50 auf, mit dem er die Tür 11 hält. Um die Tür in die gezeigte Endposition zu bewegen, durchgreift der Roboterarm 41 die Karosserie 10 zwischen Dach 12 und Untergestell 14. Im Ausführungsbeispiel ist das Greifwerkzeug 50 mit einer Innenseite der Tür 11 verbunden, so dass eine schon vorlackierte Außenseite keinen mechanischen Belastungen ausgesetzt ist.

Die Montageanordnung 100 umfasst weiterhin eine Mess- oder Vermessungseinrichtung 60. Die Vermessungseinrichtung 60 ist in Bezug auf die Fahrzeuglängsachse L gegenüber dem Montageroboter 40 angeordnet. Die Vermessungseinrichtung kann bevorzugt von Hand relativ zu der Fahrzeugkarosserie 10 bewegt werden, um eine optimale Position zum Messen von Spalten S1, S2 im Umfangsbereich der Tür 11 zwischen Tür 11 und Karosserie 10 einzunehmen. Die Spalte S1, S2 und weitere Spalte, die in der Schnittansicht nicht zu sehen sind, dienen dazu, dass die fertig montierte Tür 11 relativ zur Karosserie 10 bewegt werden kann. Dazu ist eine Mindestspaltbreite an jeder Umfangsposition der Tür 11 vorgegeben. Die tatsächliche Spaltbreite kann davon aufgrund von Fertigungstoleranzen von Tür 11 und Karosserie 10 abweichen, dazu können weitere Faktoren, wie das Gewicht der Tür, deren Verankerung in den Scharnieren etc. kommen, die ebenfalls die Spaltbreite beeinflussen können. Die Vermessungseinrichtung 60 ist vorgesehen, um das oder die tatsächlichen Spaltmaß/e zu erfassen. Bevorzugt umfasst die Vermessungseinrichtung 60 nur einen Vermessungseinrichtungskörper 62 und einen Sensor 61. Bei dem Vermessungseinrichtungskörper kann es sich um eine einfache Befestigungsvorrichtung für den Sensor oder um einen einfachen Industrieroboter mit oder ohne Roboterarm handeln.

Schließlich umfasst die Montageanordnung 100 ein externes Vermessungssystem 70, wie beispielsweise ein Laser-Radar, ein Indoor GPS, oder einen 3D-Laser, mit einem entsprechenden Sensor 71, das oder der die genaue Position des Karosserie im Raum, die genaue Position des Montageroboters 40 und/oder der Vermessungseinrichtung 60 relativ zur Karosserie und/oder die genau Position der Tür 11 relativ zur Karosserie 10 feststellen kann.

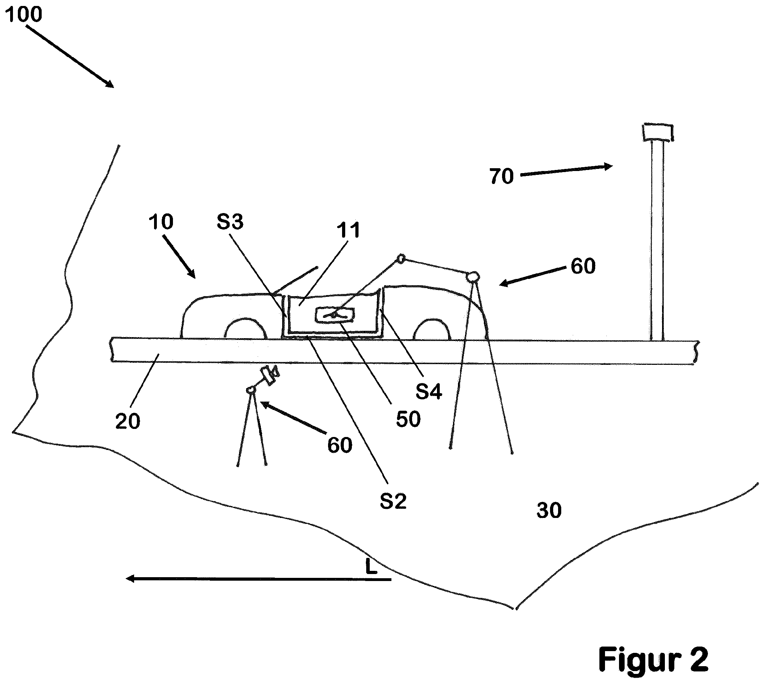

Die Figur 2 zeigt eine alternative Ausführung der erfindungsgemäßen Montageanordnung 100 anhand der Montage einer Tür 11 mit einer Fahrzeugkarosserie 10 für ein Cabriolet in einer Seitenansicht. Anders als in der Figur 1 sind der Montageroboter 40 und die Vermessungseinrichtung 60 auf derselben Seite, im Bild vor der Karosserie 10, des Transportmittels 20 angeordnet. Es wäre aber ebenso möglich, dass der Montagroboter 40 wie in Figur 1 auf der gegenüberliegenden Seite der Karosserie 10 angeordnet ist. Schließlich kann der Montageroboter 40 zum Beispiel über eine Laufschiene mit einer Brücke, die die Montaganordnung überspannt, oder mit einer Raumdecke verbunden sein, oder vor oder hinter der Karosserie 10 angeordnet sein. Das Greifwerkzeug 50 hält die Tür 11 an einer Innenseite und rund um die Tür 11 sind Spalte S2, S3 und S4 zu sehen, die mit der Vermessungseinrichtung 60 erfasst werden können.

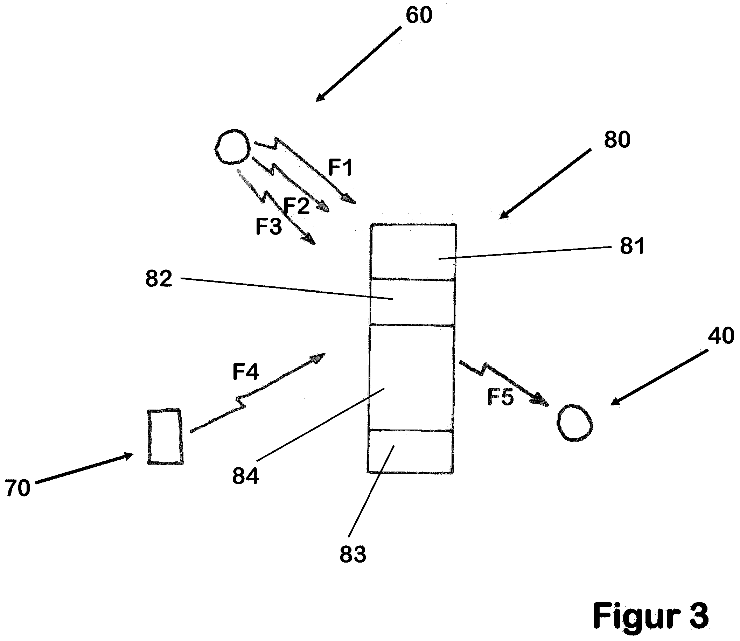

Die Figur 3 zeigt in einer Skizze der Steuerung 80, die zumindest einen Speicher 81, einen Empfänger 82, einen Prozessor 84 und einen Sender 83 umfasst, um Signale F1, F2, F3, F4 empfangen und Signale F5 aussenden zu können.

Bei den Signalen F1 bis F4, die vom Empfänger 82 empfangen werden können, handelt es sich um die Signale der Vermessungseinrichtung 60 und der externen Vermessungseinheit 70. Empfangen kann hier bedeuten, dass die Signale an die Steuerung kabellos oder über Kabel, insbesondere Glasfaserkabel, übertragen werden und von dieser übernommen werden, zum Beispiel zur weiteren Verarbeitung direkt dem Prozessor 84 zugeführt werden. Im Speicher 81 können Soll-Daten für das optimale Spaltmaß der Tür 11 hinterlegt sein. Der Prozessor 84 kann dann die von der Vermessungseinrichtung 60 und der externen Vermessungseinrichtung 70 (falls diese von der Montageanordnung 100 umfasst ist) gemessenen Ist-Daten mit den im Speicher 81 hinterlegten Soll-Daten vergleichen und eventuelle Abweichungen feststellen. Bei den Abweichungen kann der Prozessor 84 bevorzugt eine Gewichtung vornehmen, er kann also zwischen hoch relevanten und weniger relevanten Abweichungen gewichten. Als Parameter für die Gewichtung kann beispielsweise der Punkt der Abweichung des Spaltmaßes am Außenumfang der Tür 11 herangezogen werden, die - je nach Lage - kritisch oder weniger kritisch sein kann.

Aus diesen Abweichungen kann der Prozessor 84 Korrekturdaten berechnen und diese an den Montageroboter 40 senden, so dass dieser die Position der Tür 11, in der er sie für die Montage hält, korrigieren kann. Sind die Spalte S1, S2, S3, S4 so groß, dass keine sinnvolle Korrektur erfolgen kann, kann die Steuerung den aktuellen Einbauvorgang stoppen und automatisch mit der nächsten Türe weitermachen, oder die Montage stoppen und ein Alarmsignal an einem Ausgabegerät generieren.

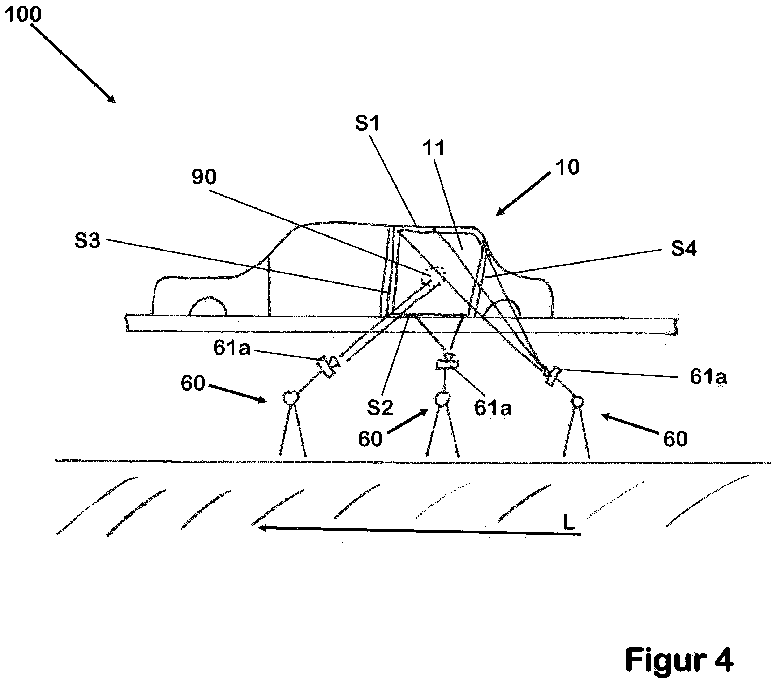

Die Figur 4 zeigt eine Ausführung der Montageanordnung 100 mit drei Vermessungseinrichtungen 60a, 60b, 60c zum Vermessen der Spaltbreite der Spalte S1, S2, S3, S4, die zwischen der Fahrzeugkarosserie 10 und der Tür 11 zu sehen sind, wenn die Tür 11, wie in der Figur 4 gezeigt, bereits mit der Karosserie verbunden ist. Die Sensoren 61a, 61b, 61c können starr an der jeweiligen Vermessungseinrichtungen 60a, 60b, 60c angeordnet sein und nach dem Triangulationsprinzip die Spaltbreit der Spalte S1, S2, S3, S4 und/oder Position der Tür 11 erfassen. Der Montageroboter 40, der noch mit der Tür 1 verbunden sein kann, ist nicht gezeigt. Die Vermessungseinrichtung 60a detektiert die Lage der Tür 11 relativ zur Karosserie 10, indem sie die Lage eines Merkmals auf der Tür 11 erfasst. Dabei kann die Position der Tür 11 zur Karosserie 10 in Längsrichtung L eingerichtet werden, die die Spaltmaße der Spalte 3 und 4 bestimmt. Die Vermessungseinrichtung 60a mit dem Sensor 61a kann dabei mit einer nicht gezeigten externen Vermessungseinheit 70 zusammenwirken. Die Vermessungseinrichtung 60c mit dem Sensor 61c vermisst die Spaltbreite des Spalts S1 an einer Oberkante der Tür 11, während die Vermessungseinrichtung 60 mit dem Sensor 61b mit dem Sensor 61b die Spaltbreite des Spaltes S2 an der Unterseite der Tür 11 kontrolliert. Zusätzlich können weitere Vermessungseinrichtungen genutzt werden, um die Spalte S3 und S4, respektive der Ist-Maß, zu kontrollieren.

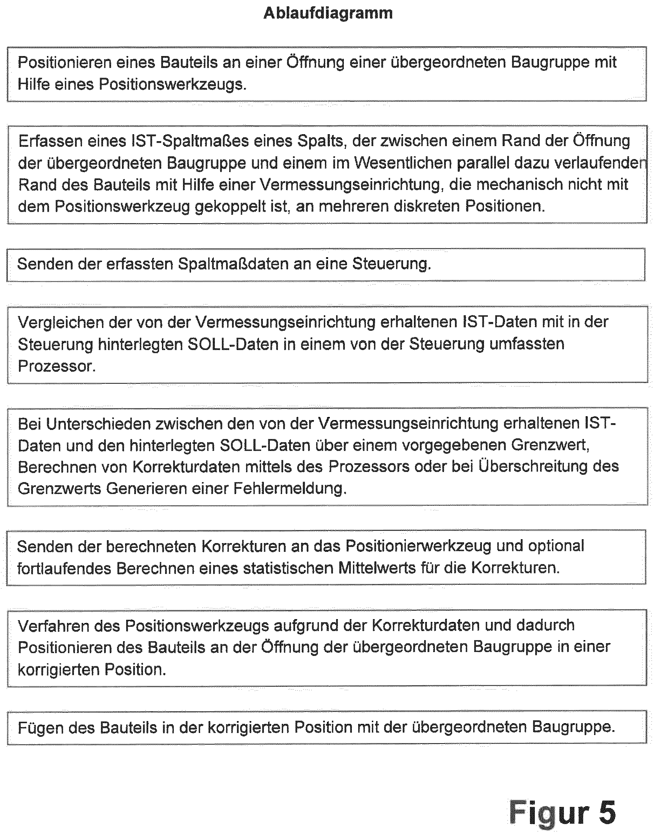

Die Figur 5 zeigt in einem Ablaufdiagramm das Verfahren, das benutzt wird, um ein Bauteil an einer Öffnung einer übergeordneten Baugruppe mit Hilfe eines Positionswerkzeugs zu positionieren. Das Verfahren umfasst die Schritte des
- Greifens des Bauteils mit einem Positionierwerkzeug und das Führen des Bauteils mit dem Positionierwerkzeug in eine Montageposition an der Baugruppe,
- Erfassen eines Spalts, respektive eines Spaltmaßes des Spalts, der zwischen einem Rand der Öffnung der übergeordneten Baugruppe und einem im Wesentlichen dazu parallel verlaufenden Umfangsrand des Bauteils gebildet ist mit Hilfe von wenigstens einer Vermessungseinrichtung und/oder optional einer externen Vermessungseinrichtung,
- Senden des erfassten Spaltmaßes an eine Steuerung,
- Vergleichen der von der Steuerung empfangenen IST-Spaltmaßdaten mit in einem Speicher der Steuerung hinterlegten SOLL-Spaltmaßdaten in einem Prozessor der Steuerung,
- Berechnen und optional Gewichten von Abweichungen zwischen den SOLL-Spaltmaßdaten und den IST-Spaltmaßdaten,
- Berechnen von Korrekturdaten, falls die Abweichungen einen vorgegebenen Grenzwert überschreiten,
- Senden der berechneten Korrekturdaten an das Positionierwerkzeug, wenn diese den Grenzwert nicht übersteigen oder
   o Generieren einer Fehlermeldung,
- Bewegen des Positionierwerkzeugs aufgrund der von der Steuerung empfangenen Korrekturdaten und dadurch Neupositionieren des Bauteils an der Öffnung der übergeordneten Baugruppe.
- Optional Kontrollieren der korrigierten Position durch die Vermessungseinrichtung,
- Fügen des Bauteils mit der übergeordneten Baugruppe.

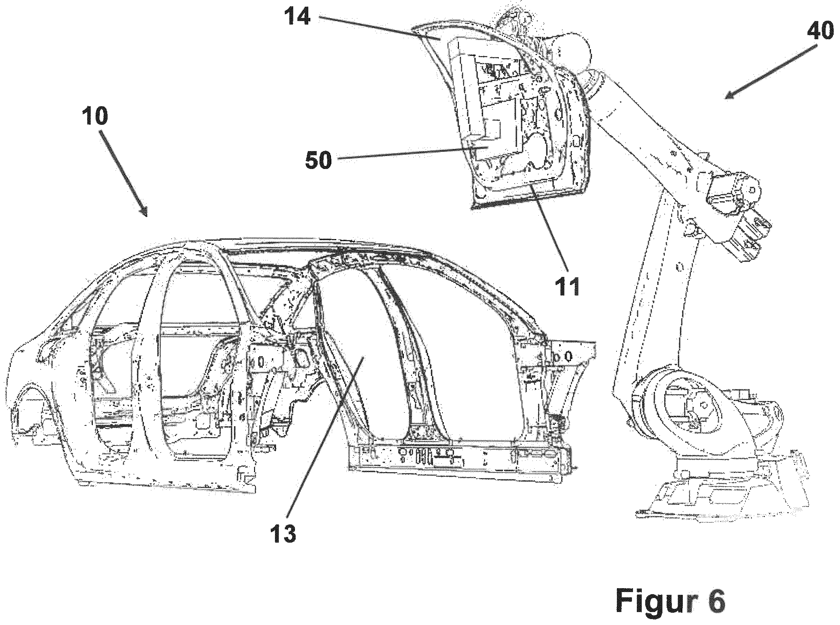

Die Figuren 6 bis 12 zeigen den Montageroboter 40, der eine Tür 11 in eine Karosserie einsetzt, wobei mehrere alternative Möglichkeiten dargestellt sind.

In der Figur 6 ist der Montageroboter 40 neben der Karosserie 10 angeordnet und ist gerade dabei eine mit dem Greifwerkzeug 50 verliersicher verbundene Tür 11 von außen an der Karosserieöffnung 13 für die Türe 11 zu platzieren. Dabei steht der Montageroboter 40 auf der Seite der Karosserie 10 an der die Türe montiert werden soll. Zum Greifen der Tür 11 hat der Montageroboter 40 das Greifwerkzeug 50 durch die Fensteröffnung 14 der Tür 11 bewegt und kann so die Tür 11 an einer Innenseite greifen und relativ zur Karosserie 10 positionieren. Die nicht gezeigt Vermessungseinrichtung 60 ist in diesem Fall auf derselben Seite neben der Karosserie angeordnet, wie der Montageroboter 40.

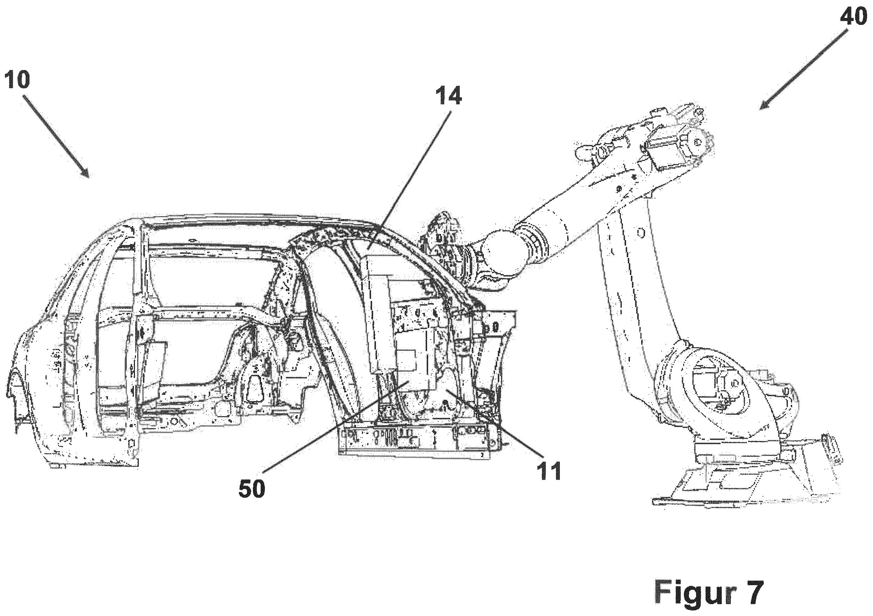

In der Figur 7 hat der Montageroboter 40 die Tür 11 der Figur 1 in die Montagposition bewegt, in die Breiten der zwischen der Tür 11 und der Karosserie 10 verbleibenden Spalte S1, S2, S3, S4 von der nicht gezeigten Vermessungseinrichtung 60 und optional zusätzlich von der nicht gezeigten externen Vermessungseinrichtung 70 erfasst werden können.

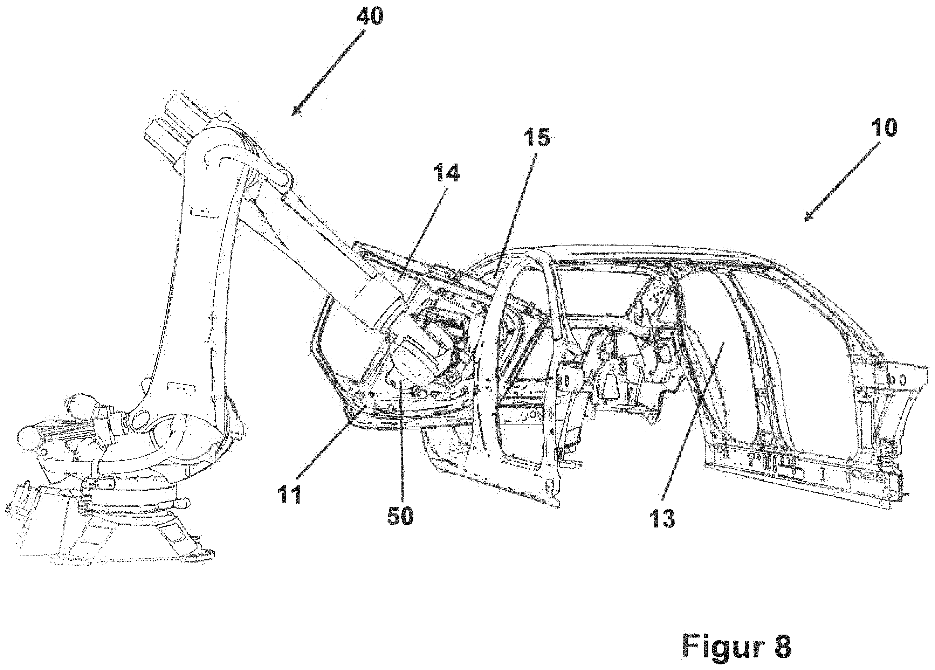

Die Figur 8 zeigt eine alternative Türmontage, bei der die Tür 11 von dem Montageroboter 40 durch die Karosserie 10 hindurch in die Montageposition bewegt wird. Der Montageroboter 40 muss jetzt nicht mehr die Fensteröffnung 14 in der Tür 11 durchgreifen, sondern hat das Greifwerkzeug 50 direkt mit der Innenseite der Tür 11 verbunden und bewegt die Tür 11 durch die Karosserieöffnung 15 und den Innenraum der Karosserie 10, um sie in der Karosserieöffnung 13 für die Montage zu positionieren. Die nicht gezeigte Vermessungseinrichtung 60 ist auf der gegenüberliegenden Seite der Karosserie 10 angeordnet.

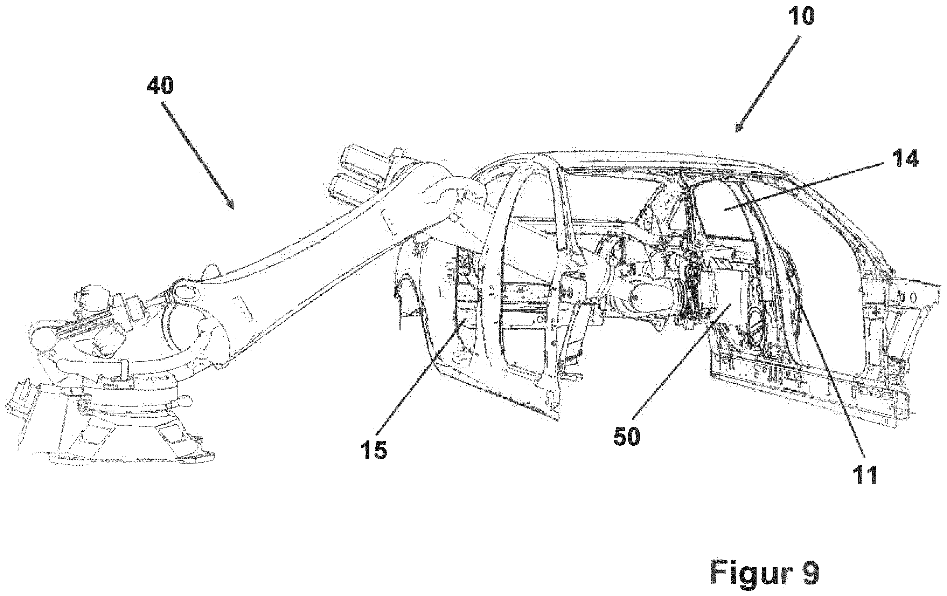

Die Figur 9 zeigt die Tür 11 der Figur 8 in der Montageposition, in der die Montageposition durch die Vermessungseinrichtung 60 überprüft werden kann.

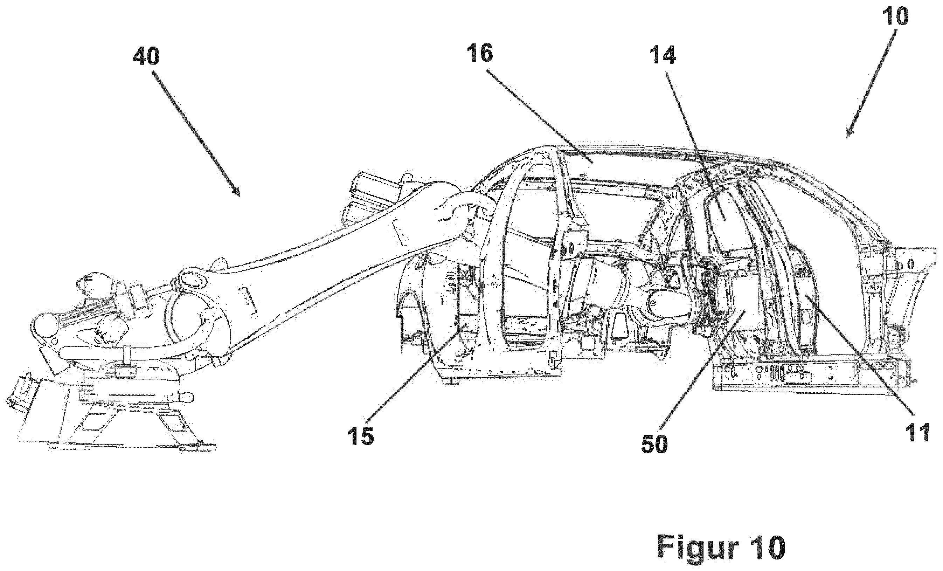

In der Figur 10 umfasst die Karosserie 11 eine Öffnung 16 für beispielsweise ein Panoramadach. Auch hier ist die Tür 11 durch die Karosserie 10 in die gezeigte Montageposition bewegt worden. Alternativ könnten die Tür 11 in diesem Fall von dem Montageroboter 40 durch die Öffnung 16 in die Montageposition bewegt werden.

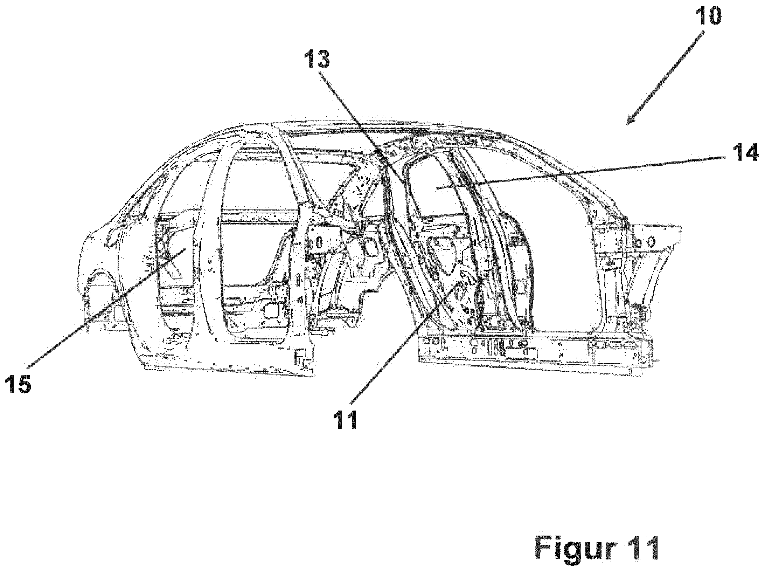

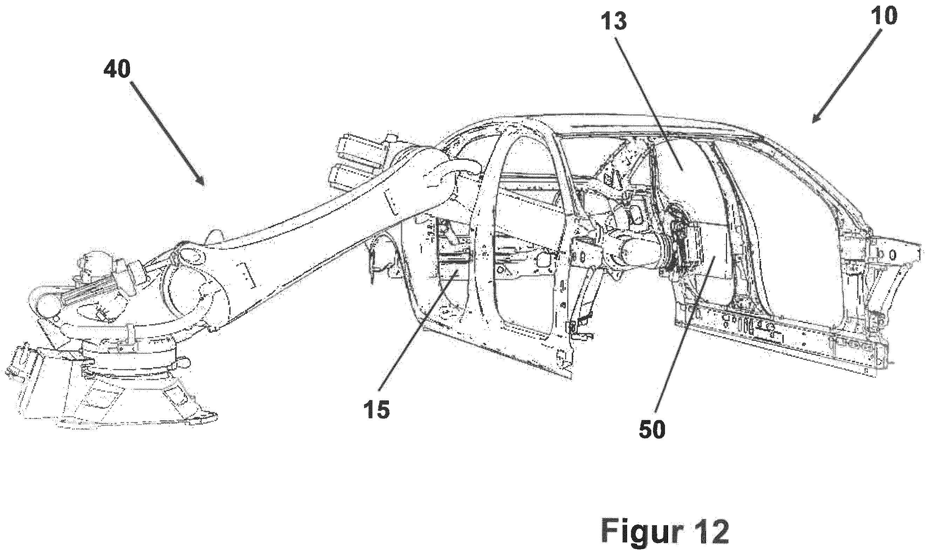

Die Figuren 11 und 12 zeigen in der Zusammenschau eine weitere Möglichkeit für die Türmontage an einer Karosserie 10. Die Tür 11 wird an einer Längsseite der Karosserie 10 durch eine separate, nicht gezeigte Zustellvorrichtung in die Umgebung der Karosserieöffnung 13 bewegt (Figur 11). Bevorzugt gleichzeitig bewegt der Montageroboter 40 das Greifwerkzeug 50 durch die Karosserieöffnung 15 und den Innenraum der Karosserie 10 bis durch die Karosserieöffnung 13. Dort greift er die bereitgestellte Tür 11 und bewegt diese in die Montageposition, wo ihre Einbauposition von der nicht gezeigten Vermessungseinrichtung 60 die auf der Seite der Karosserie angeordnet ist, auf der die Tür 11 bereitgestellt wird, vermessen werden kann.

## Patentansprüche

1. Montageanordnung zur Montage eines Bauteils (11) an einer Öffnung einer übergeordneten Baugruppe (10), wobei die Montageanordnung (100) umfasst:
wenigstens einen Montageroboter (40) mit einer Bauteilaufnahme (50) zum Aufnehmen des Bauteils (11) und zum Positionieren des Bauteils (11) in einer Montageposition,
eine Vermessungseinheit (60; 60a, 60b, 60c), mit wenigstens einem Sensor (61; 61a, 61b, 61c), um eine Lage des von dem Montageroboter (40) in der Montageposition gehaltenen Bauteils (11) relativ zu der Baugruppe (10) zu erfassen,
und eine Steuerung (80), die mit dem wenigstens einen Montageroboter (40) und der Vermessungseinheit (60; 61, 62, 63) verbunden ist, mit einer Empfangseinheit (82) für Signale der Vermessungseinheit (60; 61, 62, 63), einem Prozessor (84), der die von der Empfangseinheit (82) empfangenen Signale verarbeitet, und einer Sendeeinheit (83) zum Senden von Stellsignalen an den wenigstens einen Montageroboter (40),
wobei die Vermessungseinheit (60; 60a, 60b, 60c) eine Trägereinheit (62) umfasst, die nur den Sensor (61; 61a, 61b, 61c) trägt,
wobei die Vermessungseinheit (60; 61; 62; 63) im Bereich der Montageanordnung relativ zu der übergeordneten Baugruppe (10) und dem Montageroboter (40) automatisch verfahrbar oder von Hand verstellbar ist.

2. Montageanordnung nach Anspruch 1, wobei der wenigstens eine Sensor (61; 61a, 61b, 61c) ein 3D Sensor oder ein 2D Sensor ist oder wenigstens zwei 1D Sensoren oder eine Kombination davon umfasst, der/die hergerichtet sind, die Breite eines Spalts (S1, S2, S3, S4) zwischen zwei im Wesentlichen parallel verlaufenden Kanten der Baugruppe (10) und des Bauteils (11) zu erfassen.

3. Montageanordnung nach einem der vorhergehenden Ansprüche, wobei die Aufnahme (50) zum Aufnehmen des Bauteils (11) mit dem Bauteil (11) an einer definierten Bauteilinnenseite verbindbar ist, bevorzugt Vertiefungen, Ausnehmungen, Durchgangslöcher, Bohrungen, Durchbrüche in einer definierten Innenseite des Bauteils (11) nach der 3-2-1- Regel nutzt, um das Bauteile (11) definiert in der Montageposition bereitzustellen.

4. Montageanordnung nach einem der vorhergehenden Ansprüche, wobei der Montageroboter (40) das Bauteil (11) so greift und positioniert, dass eine Außenseite des Bauteils (11) für die Vermessungseinheit (61; 61a, 61b, 61c) im Wesentlichen vollflächig zugänglich ist.

5. Montageanordnung nach einem der vorhergehenden Ansprüche, wobei die Montageanordnung (100) ferner wenigstens ein weiteres externes Vermessungssystem (70) umfasst, wie beispielsweise einen 3D-Lasertracker, ein Indoor-GPS, ein Laser-Radar oder eine andere 3D Messmethode zur genauen Bestimmung der Montageposition des Bauteils (11) relativ zur Baugruppe (10).

6. Montageanordnung nach einem der vorhergehenden Ansprüche, wobei der wenigstens eine Sensor (61; 61a, 61b, 61c) ein optischer Sensor, wie ein Bildverarbeitungssensor, eine Kamera oder ein anderer Sensor ist, mit dem ein Abstand zwischen zwei im Wesentlichen parallel zueinander verlaufenden Kanten ermittelbar ist.

7. Montageanordnung nach einem der vorhergehenden Ansprüche, wobei die Steuerung (80) einen Speicher (82) umfasst, in dem theoretisch ermittelte Soll-Daten für eine Relativposition der Bauteils (11) zu der Baugruppe (10) in der Fügeposition hinterlegt sind und wobei der Prozessor (84) bevorzugt hergerichtet ist, die im Speicher (82) hinterlegten Soll-Daten mit von der Vermessungseinheit (60; 61, 62, 63) erfassten und an die Empfangseinheit (82) gesandten Ist-Daten zu vergleichen und daraus Korrekturdaten für den Montageroboter (40) zu berechnen.

8. Montageanordnung nach dem vorhergehenden Anspruch, wobei die errechneten Korrekturdaten von der Sendeeinheit (83) als Stellsignale an den Montageroboter (40) gesandt werden.

9. Montageanordnung nach einem der vorhergehenden Ansprüche, wobei es sich bei der Baugruppe (10) um eine Fahrzeugkarosserie und bei dem Bauteil bevorzugt um eine Fahrzeugtür (11), einen Kofferraumdeckel, einen Deckel, eine Klappe etc. handelt, die mit der Fahrzeugkarosserie (10) so verbindbar sind, dass sie einen sichtbaren Teil eines fertigen Fahrzeugs bilden.

10. Montageanordnung nach dem vorhergehenden Anspruch, wobei der Montageroboter (40) und die Vermessungseinheit (60; 61, 62, 63) auf derselben Seite neben der Baugruppe (10) oder an gegenüberliegenden Längsseiten der Baugruppe (10) angeordnet sind.

11. Montageanordnung nach einem der vorhergehenden Ansprüche, wobei die Montageanordnung (100) ferner wenigstens eine Fügevorrichtung wie einen Fügeroboter umfasst, die im Rahmen der Montage notwendige Fügeaufgaben ausführt.

12. Montageanordnung nach dem vorhergehenden Anspruch, wobei die Montageanordnung ferner eine Zuführungsvorrichtung umfasst, die zur Montage notwendige Teile, wie Bolzen, Niete, Schrauben, Muttern, etc. der Fügevorrichtung zuführt.

13. Montageanordnung nach einem der zwei vorhergehenden Ansprüche, wobei die Fügevorrichtung und/oder die Zuführungsvorrichtung neben der Baugruppe auf derselben Seite angeordnet ist/sind wie der Montageroboter, oder an einer Brücke, die die Montageanordnung (100) überspannt.

14. Verfahren zum Montieren eines Bauteils an einer Öffnung einer übergeordneten Baugruppe, bevorzugt mit der Montageanordnung (100) nach einem der Ansprüche 1 bis 13, wobei das Verfahren die Schritte umfasst:
a) Greifens des Bauteils (11) mit einem Positionierwerkzeug (40) und das Führen des Bauteils (11) mit dem Positionierwerkzeug (40) in eine Montageposition oder Messposition an der Baugruppe (10),
b) Erfassen eines Spalts (S1, S2, S3, S4), respektive eines Spaltmaßes des Spalts (S1, S2, S3, S4), der zwischen einem Rand der Öffnung der übergeordneten Baugruppe (10) und einem im Wesentlichen dazu parallel verlaufenden Umfangsrand des Bauteils (11) gebildet ist mit Hilfe von wenigstens einer Vermessungseinrichtung (60) und/oder eines externen Vermessungssystems (70),
c) Senden des erfassten Spaltmaßes an die Steuerung (80),
d) Vergleichen der von der Steuerung (80) empfangenen IST-Spaltmaßdaten mit in dem Speicher (82) der Steuerung (80) hinterlegten SOLL-Spaltmaßdaten in einem Prozessor (84) der Steuerung (80),
e) Berechnen und optional Gewichten von Abweichungen zwischen den SOLL-Spaltmaßdaten und den IST-Spaltmaßdaten,
f) Berechnen von Korrekturdaten, falls die Abweichungen einen vorgegebenen Grenzwert überschreiten,
g) Senden der berechneten Korrekturdaten an das Positionierwerkzeug (40), wenn diese den Grenzwert nicht übersteigen, oder Generieren einer Fehlermeldung,
h) Bewegen des Positionierwerkzeugs (40) aufgrund der von der Steuerung (80) empfangenen Korrekturdaten und dadurch Neupositionieren des Bauteils (11) an der Öffnung der übergeordneten Baugruppe (10),
i) optional Kontrollieren der korrigierten Position durch die Vermessungseinrichtung (60) und/oder das externe Vermessungssystem (70),
j) Fügen des Bauteils (11) mit der übergeordneten Baugruppe (10).

15. Verfahren zum Montieren eines Bauteils an einer Öffnung einer übergeordneten Baugruppe, bevorzugt mit der Montageanordnung (100) nach einem der Ansprüche 1 bis 13, wobei das Verfahren die Schritte umfasst:
a) Greifens des Bauteils (11) mit einem Positionierwerkzeug (40) und das Führen des Bauteils (11) mit dem Positionierwerkzeug (40) in eine Montageposition oder Messposition an der Baugruppe (10),
b) Erfassen eines Spalts (S1, S2, S3, S4), respektive eines Spaltmaßes des Spalts (S1, S2, S3, S4), der zwischen einem Rand der Öffnung der übergeordneten Baugruppe (10) und einem im Wesentlichen dazu parallel verlaufenden Umfangsrand des Bauteils (11) gebildet ist mit Hilfe von wenigstens einer Vermessungseinrichtung (60) und/oder eines externen Vermessungssystems (70),
c) Senden des erfassten Spaltmaßes an die Steuerung (80),
d) Vergleichen der von der Steuerung (80) empfangenen IST-Spaltmaßdaten mit in dem Speicher (82) der Steuerung (80) hinterlegten SOLL-Spaltmaßdaten in einem Prozessor (84) der Steuerung (80),
e) Berechnen und optional Gewichten von Abweichungen zwischen den SOLL-Spaltmaßdaten und den IST-Spaltmaßdaten,
f) Bewegen des Positionierwerkzeugs (40) aufgrund der von der Steuerung (80) empfangenen Korrekturdaten und dadurch Neupositionieren des Bauteils (11) an der Öffnung der übergeordneten Baugruppe (10),
g) Wiederholung der Schritte a) bis f) an einer vorgegebenen Anzahl von Montagen,
h) Bilden eines Mittelwerts aus den in den Schritten e) und g) gemessenen Abweichungen und daraus resultierenden Korrekturen,
i) Weiterführen der Produktion einer vorgegebenen Anzahl von weiteren Montagen auf Grundlage des gefundenen Mittelwerts.

## Claims

1. A mounting arrangement for mounting a component part (11) at an opening in a superordinate assembly (10), wherein the mounting arrangement (100) comprises:
at least one mounting robot (40) featuring a component part receptacle (50) for receiving the component part (11) and for positioning the component part (11) in a mounting position;
a gauging unit (60; 60a, 60b, 60c) comprising at least one sensor (61; 61a, 61b, 61c) in order to detect a location of the component part (11), held in the mounting position by the mounting robot (40), relative to the assembly (10);
and a controller (80) which is connected to the at least one mounting robot (40) and the gauging unit (60; 61, 62, 63) and comprises a unit (82) for receiving signals from the gauging unit (60; 61, 62, 63), a processor (84) which processes the signals received by the receiving unit (82), and a transmitting unit (83) for transmitting actuating signals to the at least one mounting robot (40),
wherein the gauging unit (60; 60a, 60b, 60c) comprises a carrier unit (62) which carries the sensor (61; 61a, 61b, 61c) only,
wherein the gauging unit (60; 61, 62, 63) can be automatically moved or manually adjusted in the region of the mounting arrangement relative to the superordinate assembly (10) and the mounting robot (40).

2. The mounting arrangement according to claim 1, wherein the at least one sensor (61; 61a, 61b, 61c) is a 3D sensor or a 2D sensor or comprises at least two 1D sensors or a combination of these which are configured to detect the width of a gap (S1, S2, S3, S4) between two substantially parallel edges of the assembly (10) and component part (11).

3. The mounting arrangement according to any one of the preceding claims, wherein the receptacle (50) for receiving the component part (11) can be connected to the component part (11) on a defined inner side of the component part, preferably using recesses, cavities, transit holes, bores, apertures in a defined inner side of the component part (11) in accordance with the 3-2-1 rule in order to provide the component part (11) in a defined way in the mounting position.

4. The mounting arrangement according to any one of the preceding claims, wherein the mounting robot (40) grips and positions the component part (11) such that an outer side of the component part (11) is accessible, substantially over all of its surface, to the gauging unit (61; 61a, 61b, 61c).

5. The mounting arrangement according to any one of the preceding claims, wherein the mounting arrangement (100) also comprises at least one other external gauging system (70), such as for example a 3D laser tracker, an indoor GPS, a laser radar or other 3D measuring method for precisely determining the mounting position of the component part (11) relative to the assembly (10).

6. The mounting arrangement according to any one of the preceding claims, wherein the at least one sensor (61; 61a, 61b, 61c) is an optical sensor, such as an image processing sensor, a camera or other sensor, using which a distance between two substantially parallel edges can be ascertained.

7. The mounting arrangement according to any one of the preceding claims, wherein the controller (80) comprises a memory (82) in which theoretically ascertained target data for a position of the component part (11) relative to the assembly (10) in the joining position are stored, and wherein the processor (84) is preferably configured to compare the target data stored in the memory (82) with actual data detected by the gauging unit (60; 61, 62, 63) and transmitted to the receiving unit (82) and thence calculate correction data for the mounting robot (40).

8. The mounting arrangement according to the preceding claim, wherein the calculated correction data are transmitted by the transmitting unit (83) to the mounting robot (40) as actuating signals.

9. The mounting arrangement according to any one of the preceding claims, wherein the assembly (10) is a vehicle body and the component part is preferably a vehicle door (11), a boot lid, a cover, a flap, etc. which can be connected to the vehicle body (10) such that it forms a visible part of a finished vehicle.

10. The mounting arrangement according to the preceding claim, wherein the mounting robot (40) and the gauging unit (60; 61, 62, 63) are arranged on the same side next to the assembly (10) or on opposite longitudinal sides of the assembly (10).

11. The mounting arrangement according to any one of the preceding claims, wherein the mounting arrangement (100) also comprises at least one joining device, such as a joining robot, which performs joining tasks which are necessary within the context of the mounting operation.

12. The mounting arrangement according to the preceding claim, wherein the mounting arrangement also comprises a supply device which supplies parts necessary for the mounting operation, such as bolts, rivets, screws, nuts, etc. to the joining device.

13. The mounting arrangement according to any one of the preceding two claims, wherein the joining device and/or the supply device is/are arranged next to the assembly on the same side as the mounting robot or on a bridge which spans the mounting arrangement (100).

14. A method for mounting a component part at an opening in a superordinate assembly, preferably using the mounting arrangement (100) according to any one of claims 1 to 13, wherein the method comprises the steps of:
a) gripping the component part (11) using a positioning tool (40) and guiding the component part (11) using the positioning tool (40) into a mounting position or measuring position on the assembly (10);
b) detecting a gap (S1, S2, S3, S4) or, respectively, a clearance of the gap (S1, S2, S3, S4) which is formed between an edge of the opening in the superordinate assembly (10) and a substantially parallel circumferential edge of the component part (11), with the aid of at least one gauging device (60) and/or an external gauging system (70);
c) transmitting the detected clearance to the controller (80);
d) comparing, in a processor (84) of the controller (80), the actual clearance data received by the controller (80) with target clearance data stored in the memory (82) of the controller (80);
e) calculating and optionally weighting deviations between the target clearance data and the actual clearance data;
f) calculating correction data if the deviations exceed a predefined threshold value;
g) transmitting the calculated correction data to the positioning tool (40) if they do not exceed the threshold value or
generating an error message;
h) moving the positioning tool (40) on the basis of the correction data received from the controller (80) and thereby repositioning the component part (11) at the opening in the superordinate assembly (10);
i) optionally checking the corrected position using the gauging device (60) and/or the external gauging system (70);
j) joining the component part (11) to the superordinate assembly (10).

15. A method for mounting a component part at an opening in a superordinate assembly, preferably using the mounting arrangement (100) according to any one of claims 1 to 13, wherein the method comprises the steps of:
a) gripping the component part (11) using a positioning tool (40) and guiding the component part (11) using the positioning tool (40) into a mounting position or measuring position on the assembly (10);
b) detecting a gap (S1, S2, S3, S4) or, respectively, a clearance of the gap (S1, S2, S3, S4) which is formed between an edge of the opening in the superordinate assembly (10) and a substantially parallel circumferential edge of the component part (11), with the aid of at least one gauging device (60) and/or an external gauging system (70);
c) transmitting the detected clearance to the controller (80);
d) comparing, in a processor (84) of the controller (80), the actual clearance data received by the controller (80) with target clearance data stored in the memory (82) of the controller (80);
e) calculating and optionally weighting deviations between the target clearance data and the actual clearance data;
f) moving the positioning tool (40) on the basis of the correction data received from the controller (80) and thereby repositioning the component part (11) at the opening in the superordinate assembly (10);
g) repeating steps a) to f) for a predefined number of mounting operations;
h) averaging the deviations measured in steps e) and g) and the resultant corrections;
i) continuing production for a predefined number of other mounting operations on the basis of the determined average.

## Revendications

1. Ensemble de montage pour monter un composant (11) sur une ouverture d'un assemblage supérieur (10), l'ensemble de montage (100) comprenant :
au moins un robot de montage (40) comportant un réceptacle de composant (50) pour recevoir le composant (11) et pour positionner le composant (11) dans une position de montage ;
une unité de mesure (60 ; 60a, 60b, 60c) comportant au moins un capteur (61 ; 61a, 61b, 61c) pour détecter une location du composant (11), maintenu en position de montage par le robot de montage (40), par rapport à l'assemblage (10) ;
et un élément de commande (80) relié audit au moins un robot de montage (40) et à l'unité de mesure (60 ; 61, 62, 63) et comportant une unité (82) pour recevoir des signaux provenant de l'unité de mesure (60 ; 61, 62, 63), un processeur (84) qui traite les signaux reçus par l'unité de réception (82), et une unité de transmission (83) pour transmettre des signaux d'actionnement vers ledit au moins un robot de montage (40),
l'unité de mesure (60 ; 60a, 60b, 60c) comprenant une unité de support (62) qui ne supporte que le capteur (61 ; 61a, 61b, 61c),
l'unité de mesure (60 ; 61, 62, 63) pouvant être déplacée automatiquement ou réglée manuellement par rapport à l'assemblage supérieur (10) et au robot de montage (40) dans la zone de l'ensemble de montage.

2. Ensemble de montage selon la revendication 1, dans lequel ledit au moins un capteur (61 ; 61a, 61b, 61c) est un capteur 3D ou un capteur 2D ou comprend au moins deux capteurs 1D ou une combinaison de ces capteurs configurés pour détecter la largeur d'une fente (S1, S2, S3, S4) entre deux bords essentiellement parallèles de l'assemblage (10) et du composant (11).

3. Ensemble de montage selon l'une quelconque des revendications précédentes, dans lequel le réceptacle (50) pour recevoir le composant (11) peut être relié au composant (11) sur une face intérieure de composant définie et utilise de préférence des cavités, des évidements, des trous traversants, des alésages, des percements dans une face intérieure définie du composant (11) selon la règle 3-2-1 pour fournir de manière définie le composant (11) en position de montage.

4. Ensemble de montage selon l'une quelconque des revendications précédentes, dans lequel le robot de montage (40) saisit et positionne le composant (11) de sorte qu'une face extérieure du composant (11) soit accessible à l'unité de mesure (61 ; 61a, 61b, 61c) essentiellement sur sa surface entière.

5. Ensemble de montage selon l'une quelconque des revendications précédentes, dans lequel l'ensemble de montage (100) comprend en outre au moins un autre système de mesure externe (70), tel qu'un tracker laser 3D, un GPS d'intérieur, un radar laser ou une autre méthode de mesure 3D pour déterminer avec précision la position de montage du composant (11) par rapport à l'assemblage (10).

6. Ensemble de montage selon l'une quelconque des revendications précédentes, dans lequel ledit au moins un capteur (61 ; 61a, 61b, 61c) est un capteur optique, tel qu'un capteur de traitement d'image, une caméra ou un autre capteur pouvant déterminer une distance entre deux bords essentiellement parallèles.

7. Ensemble de montage selon l'une quelconque des revendications précédentes, dans lequel l'élément de commande (80) comprend une mémoire (82) dans laquelle sont stockées des données cibles théoriquement déterminées pour une position du composant (11) par rapport à l'assemblage (10) en position de joint, le processeur (84) étant de préférence configuré pour comparer les données cibles stockées dans la mémoire (82) avec des données réelles détectées par l'unité de mesure (60 ; 61, 62, 63) et transmises vers l'unité de réception (82) et en calculer des données de correction pour le robot de montage (40).

8. Ensemble de montage selon la revendication précédente, dans lequel les données de correction calculées sont transmises depuis l'unité de transmission (83) vers le robot de montage (40) sous forme de signaux d'actionnement.

9. Ensemble de montage selon l'une quelconque des revendications précédentes, dans lequel l'assemblage (10) est une carrosserie de véhicule et le composant est de préférence une porte de véhicule (11), un couvercle de coffre, un couvercle, un clapet, etc. pouvant être relié à la carrosserie de véhicule (10) de manière à former une partie visible d'un véhicule fini.

10. Ensemble de montage selon la revendication précédente, dans lequel le robot de montage (40) et l'unité de mesure (60 ; 61, 62, 63) sont disposés à côté de l'assemblage (10) sur le même côté ou sur des côtés longitudinaux opposés de l'assemblage (10).

11. Ensemble de montage selon l'une quelconque des revendications précédentes, dans lequel l'ensemble de montage (100) comprend en outre au moins un dispositif de joint, tel qu'un robot de joint, exécutant des tâches de joint nécessaires pour la montage.

12. Ensemble de montage selon la revendication précédente, dans lequel l'ensemble de montage comprend en outre un dispositif d'alimentation fournissant des pièces nécessaires pour la montage, telles que des boulons, des rivets, des vis, des écrous, etc., au dispositif de joint.

13. Ensemble de montage selon l'une quelconque des deux revendications précédentes, dans lequel le dispositif de joint et / ou le dispositif d'alimentation sont disposés à côté de l'assemblage sur le même côté que le robot de montage ou sur un pont enjambant l'ensemble de montage (100).

14. Procédé pour monter un composant sur une ouverture d'un assemblage supérieur, de préférence en utilisant l'ensemble de montage (100) selon l'une quelconque des revendications 1 à 13, le procédé comprenant :
a) la saisie du composant (11) par un outil de positionnement (40) et le guidage du composant (11) par l'outil de positionnement (40) dans une position de montage ou une position de mesure sur l'assemblage (10) ;
b) la détection d'une fente (S1, S2, S3, S4) ou respectivement d'une dimension de la fente (S1, S2, S3, S4) formée entre un bord de l'ouverture de l'assemblage supérieur (10) et un bord circonférentiel essentiellement parallèle du composant (11), à l'aide d'au moins un dispositif de mesure (60) et / ou d'un système de mesure externe (70) ;
c) la transmission de la dimension détectée vers l'élément de commande (80) ;
d) la comparaison des données réelles de dimension reçues par l'élément de commande (80) avec des données cibles de dimension stockées dans la mémoire (82) de l'élément de commande (80), dans un processeur (84) de l'élément de commande (80) ;
e) le calcul et éventuellement la pondération d'écarts entre les données de dimension cibles et les données de dimension réelles ;
f) le calcul de données de correction si les écarts dépassent une valeur limite prédéfinie ;
g) la transmission des données de correction calculées vers l'outil de positionnement (40) si la valeur limite n'est pas dépassée, ou
la génération d'un message d'erreur ;
h) le déplacement de l'outil de positionnement (40) en fonction des données de correction reçues de l'élément de commande (80) et ainsi le repositionnement du composant (11) sur l'ouverture de l'assemblage supérieur (10) ;
i) éventuellement la vérification de la position corrigée, par le dispositif de mesure (60) et / ou le système de mesure externe (70) ;
j) la jointure du composant (11) à l'assemblage supérieur (10).

15. Procédé pour monter un composant sur une ouverture d'un assemblage supérieur, de préférence en utilisant l'ensemble de montage (100) selon l'une quelconque des revendications 1 à 13, le procédé comprenant :
a) la saisie du composant (11) par un outil de positionnement (40) et le guidage du composant (11) par l'outil de positionnement (40) dans une position de montage ou une position de mesure sur l'assemblage (10) ;
b) la détection d'une fente (S1, S2, S3, S4) ou respectivement d'une dimension de la fente (S1, S2, S3, S4) formée entre un bord de l'ouverture de l'assemblage supérieur (10) et un bord circonférentiel essentiellement parallèle du composant (11), à l'aide d'au moins un dispositif de mesure (60) et / ou d'un système de mesure externe (70) ;
c) la transmission de la dimension détectée vers l'élément de commande (80) ;
d) la comparaison des données réelles de dimension reçues par l'élément de commande (80) avec des données cibles de dimension stockées dans la mémoire (82) de l'élément de commande (80), dans un processeur (84) de l'élément de commande (80) ;
e) le calcul et éventuellement la pondération d'écarts entre les données de dimension cibles et les données de dimension réelles ;
f) le déplacement de l'outil de positionnement (40) en fonction des données de correction reçues de l'élément de commande (80) et ainsi le repositionnement du composant (11) sur l'ouverture de l'assemblage supérieur (10) ;
g) la répétition des étapes a) à f) pour un nombre prédéfini de montages ;
h) le calcul d'une moyenne à partir des écarts mesurés aux étapes e) et g) et des corrections qui en résultent ;
i) la continuation de la production pour un nombre prédéfini d'autres montages en fonction de la moyenne déterminée.
